# EUROPEAN PATENT SPECIFICATION

(11) **EP 2 881 607 B1**
(45) Date of publication and mention of the grant of the patent: **15.03.2017**
(21) Application number: 14189868.4
(22) Date of filing: 22.10.2014
(51) Int. Cl.: F16D 13/56

(54) **Clutch apparatus for a vehicle**
Kupplungsvorrichtung für ein Fahrzeug
Dispositif d'embrayage pour un véhicule

(30) Priority: 24.10.2013 JP 2013221461
(43) Date of publication of application: 10.06.2015
(73) Proprietor: Honda Motor Co., Ltd., Tokyo 107-8556 (JP)
(72) Inventor: Sakuyama, Hisashi, Wako-shi, Saitama 351-0193 (JP)
(74) Representative: Stevens, Jason Paul

(56) References cited:
- WO-A1-2013/137413
- JP-A- 2001 050 294
- JP-A- 2004 011 764

## Description

The present invention relates to a clutch apparatus for a vehicle, which includes: a clutch outer to which power may be inputted from an internal combustion engine; a pressure receiving plate fixed to an output power shaft; a driving friction plate which is engaged by the clutch outer; a driven friction plate disposed in an opposing relationship to the driving friction plate; a pressure plate disposed for cooperation with the pressure receiving plate so as to sandwich the driving friction plate and the driven friction plate therebetween, which is movable in an axial direction of the output power shaft; a clutch hub disposed between the pressure receiving plate and the pressure plate in an axial direction of the output power shaft so as to be engaged by the driven friction plate; a counter torque reduction mechanism which causes the clutch hub to press the pressure plate in a direction in which the pressure plate is spaced away from the pressure receiving plate in response to an input of rotational power from the output power shaft to the pressure receiving plate; and a cancel mechanism which prevents the function of the counter torque reduction mechanism in a state in which the rotational speed of the clutch hub is equal to or lower than a predetermined rotational speed.

A multiple-disk clutch provided in a power unit incorporated in a vehicle such as a motorcycle and including a counter torque reduction mechanism and a cancel mechanism is disclosed in JP 2001 050294 A and Japanese Patent No. 3378100. When torque from a
driving wheel side is inputted, the counter torque reduction mechanism moves a pressure plate, which cooperates with a pressure receiving plate to sandwich a plurality of driving friction plates and a plurality of driven friction plates therebetween, so that the pressure plate is moved away from the pressure receiving plate, and thus any torque which is transmitted to an internal combustion engine side is reduced to a low level. The cancel mechanism prevents the counter torque reduction mechanism from functioning so that torque, which is inputted from a driving wheel side when the vehicle is pushed to move it, can be transmitted to the internal combustion engine.

However, the cancel mechanism disclosed in Japanese Patent No. 3378100 mentioned above is configured such that it includes a rocking cam supported on the pressure receiving plate so as to be rockable around an axial line parallel to the axis of the output power shaft. Therefore, the cancel mechanism is liable to have an increased size, and the axial size of the multiple-disk clutch may be increased by an amount corresponding to the cancel mechanism provided therefor.

The present invention has been made in view of the circumstances described above, and it is an object of at least the preferred embodiments of the present invention to provide a clutch apparatus for a vehicle which can be prevented from increasing in size even where a cancel mechanism is provided.

According to a first aspect of the present invention, there is provided a clutch apparatus for a vehicle, comprising: a clutch outer to which power from an internal combustion engine may be inputted; a pressure receiving plate fixed to an output power shaft; a driving friction plate which is engaged by the clutch outer; a driven friction plate disposed in an opposing relationship to the driving friction plate; a pressure plate disposed so as to cooperate with the pressure receiving plate to sandwich the driving friction plate and the driven friction plate therebetween, and which is movable in an axial direction of the output power shaft; a clutch hub disposed between the pressure receiving plate and the pressure plate in an axial direction of the output power shaft, for being engaged by the driven friction plate; a counter torque reduction mechanism which causes the clutch hub to press the pressure plate in a direction so that the pressure plate is spaced away from the pressure receiving plate in response to an input of rotational power from the output power shaft to the pressure receiving plate; and a cancel mechanism which prevents the counter torque reduction mechanism from functioning in a state in which a rotational speed of the clutch hub is equal to or lower than a predetermined rotational speed; the cancel mechanism including a weight member fitted for sliding movement in the clutch hub in such a manner as to be capable of slidably moving in a radial direction of the output power shaft and having an engaging portion at a radially inner end portion, an elastic member which biases the weight member radially inwardly, and a locking element formed on the output power shaft or on a locking member fixed to the output power shaft, so as to be capable of being engaged with the engaging portion from the side opposite to the pressure plate.

Thus, the cancel mechanism is configured such that the engaging portion at the radially inner end portion of the weight member, which is fitted for radial sliding movement in the clutch hub and biased radially inwardly, is engaged with the locking element, which is formed on the output power shaft or the locking member fixed to the output power shaft, from the side opposite to the pressure plate in a state in which centrifugal force acting upon the weight member is low (that is, at a low rotational speed state of the clutch hub), to restrict movement of the clutch hub in the direction in which the pressure plate is pressed. Thus, since the cancel mechanism can be made compact, it is possible to prevent increase of the size of the clutch mechanism in the axial direction, and apply counter torque to the output power shaft when the vehicle is pushed to be moved, to start up the internal combustion engine.

Preferably, the engaging portion is formed as an inclined face inclined such that the radially outer part projects further toward the pressure plate side, and the locking element is formed as a tapering face.

With this arrangement, the engaging portion is in the form of an inclined face, and is engaged with the locking element which is also in the form of a tapering face. Therefore, even if friction wears away the engaging portion and the locking portion, since the wedge-shaped weight member moves, the engagement of the engaging portion with the locking portion can be achieved for a long period of time and the durability of the cancel mechanism can be enhanced.

Preferably, the locking member on which the locking element is formed is a thrust washer, sandwiched between the pressure receiving plate mounted in a fixed axial position on the output power shaft so that it cannot rotate relative thereto and a nut screwed onto the output power shaft.

Since the locking member is formed as a thrust washer, there is no need to separately provide a specific locking member, and the number of parts can be reduced. Further, when the locking portion is abraded, it is only necessary to exchange the thrust washer, and consequently, superior maintainability can be achieved.

Preferably, the clutch hub has a radially extending sliding hole provided therein in which the weight member is fitted for sliding movement, and the elastic member is a coil spring disposed in a compressed state between the weight member and a spring receiving member formed as a separate member from the weight member and accommodated at a fixed position in the sliding hole radially outwardly of the weight member, the spring receiving member having a projecting guide shaft portion so as to be inserted into an end portion of the coil spring at the spring receiving member side.

Thus, the clutch apparatus can be configured such that the weight member, the coil spring and the spring receiving member are mounted in a juxtaposed relationship with each other in a radial direction on the clutch hub. Therefore, a more compact configuration of the cancel mechanism can be achieved.

In a further preferred form, the spring receiving member is engaged with a pin mounted on the clutch hub across the sliding hole at the side of the spring receiving member opposite to the coil spring.

With this arrangement, the spring receiving member is engaged with the pin mounted on the clutch hub across the sliding hole to restrict movement of the spring receiving member. Thus, during assembly, the weight member, coil spring, spring receiving member and pin may be assembled in this order to the clutch hub, and so the ease of assembly can be enhanced.

Preferably, the clutch hub integrally has a plurality of spoke portions extending radially in an opposing relationship to the pressure receiving plate, and the weight member is fitted for sliding movement on a side face of a selected one spoke portion of the plurality of spoke portions at the side opposite to the pressure receiving plate.

With this arrangement, a dead space formed between the pressure plate and the clutch hub can be utilized effectively to dispose the cancel mechanism.

A preferred embodiment of the invention will now be described by way of example only and with reference to the accompanying drawings, in which:
FIG. 1 is a left side view of a motorcycle;
FIG. 2 is a vertical cross-sectional view of a clutch apparatus;
FIG. 3 is a front elevational view of a pressure receiving plate;
FIG. 4 is a front elevational view of a clutch hub;
FIG. 5 is a cross-sectional view taken along line 5-5 of FIG. 2;
FIG. 6 is a cross-sectional view taken along line 6-6 of FIG. 3;
FIG. 7 is a cross-sectional view corresponding to FIG. 5 but in a state in which counter torque acts; and
FIG. 8 is an enlarged view of a portion indication by mark 8 in FIG. 2.

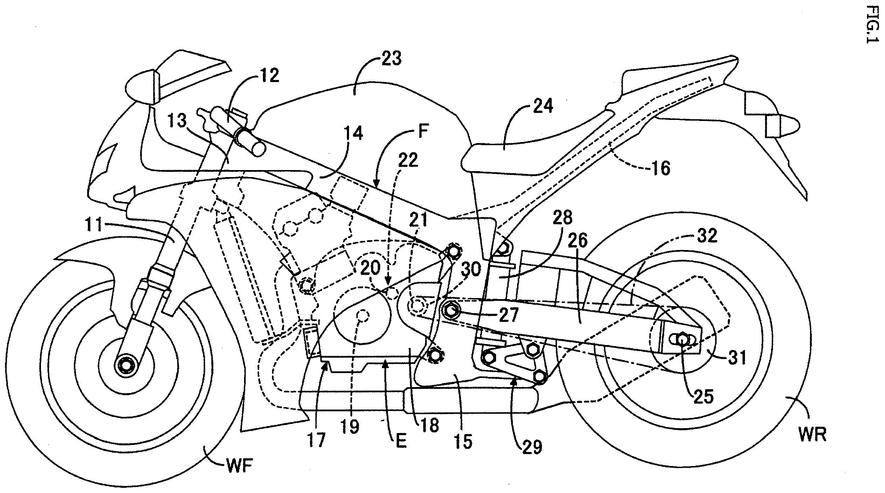

Referring to FIG. 1, a body frame F of a motorcycle includes a head pipe 13, a pair of left and right main frames 14, a pair of left and right pivot frames 15, and a pair of left and right seat rails 16. The head pipe 13 supports a front fork 11, which supports a front wheel WF for rotation thereon, and a steering handlebar 12 for steering movement. The main frames 14 extend rearwardly and downwardly from the head pipe 13. The pivot frames 15 are integrally connected to rear end portions of the main frames 14 and extend downwardly. The seat rails 16 are connected to rear end portions of the main frames 14 and extend rearwardly and upwardly. An internal combustion engine E is mounted on the body frame F and includes an engine main body 17 disposed below the main frames 14 in front of the pivot frames 15. A crankcase 18 forms part of the engine main body 17 and accommodates a gear transmission 22 therein. The gear transmission 22 includes a main shaft 20 and a countershaft 21 which extend parallel to a crankshaft 19 which is supported for rotation on the crankcase 18, and the axes of the crankshaft 19, main shaft 20 and countershaft 21 extended in the lateral (widthwise) direction of the vehicle.

A fuel tank 23 is mounted on the main frames 14 and disposed above the engine main body 17. A rider's seat 24 is disposed behind the fuel tank 23.

A swing arm 26 is supported at its front end for vertical rocking motion on the pivot frames 15 through a support shaft 27. At its rear end, the swing arm 26 supports an axle 25 of a rear wheel WR for rotation thereon. A rear cushion unit 28 is connected at its upper end portion to a rear end portion of the main frames 14 and is connected at its lower end portion to a lower portion of the swing arm 26 at a longitudinally intermediate location through a link 29.

A driving sprocket wheel 30 is fixed to the countershaft 21 of the gear transmission 22 at the left side of the crankcase 18. A drive chain 32 extends between and around a driven sprocket wheel 31 fixed to the axle 25 of the rear wheel WR and the driving sprocket wheel 30.

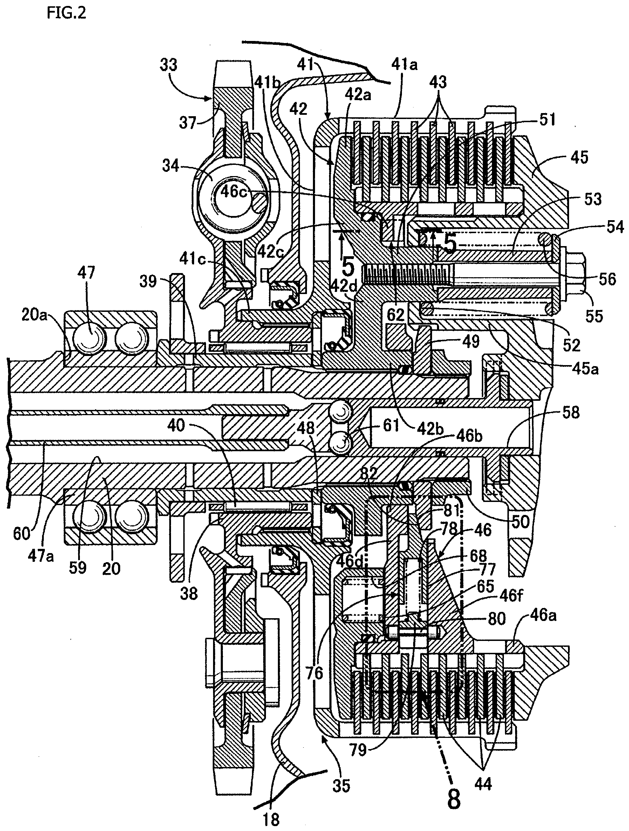

Referring now to FIG. 2, a primary gear reduction mechanism 33, a damper spring 34 and a clutch apparatus 35 according to a preferred embodiment of the present invention are interposed between the crankshaft 19 and the main shaft 20 of the gear transmission 22.

The primary gear reduction mechanism 33 includes a primary driving gear (not shown) provided on the crankshaft 19, and a primary driven gear 37 which meshes with the primary driving gear. A transmission member 38 is supported for rotation on a cylindrical sleeve 39, which coaxially surrounds the main shaft 20, through a needle bearing 40. The transmission member 38 is connected to the primary driven gear 37 through the damper spring 34.

The clutch apparatus 35 includes a clutch outer 41, a pressure receiving plate 42, a plurality of driving friction plates 43, a plurality of driven friction plates 44, a pressure plate 45, and a clutch hub 46. Power is inputted from the internal combustion engine E to the clutch outer 41. The pressure receiving plate 42 is fixed to the main shaft 20, which is an output power shaft for transmitting power to the rear wheel WR. The driving friction plates 43 are juxtaposed in the axial direction of the main shaft 20 and are held in engagement with the clutch outer 41. The driven friction plates 44 are disposed between the driving friction plates 43, in an opposing relationship to (facing) the driving friction plates 43. The pressure plate 45 is disposed such that it cooperates with the pressure receiving plate 42 to sandwich the driving friction plates 43 and the driven friction plates 44 therebetween and is movable in the axial direction of the main shaft 20. The clutch hub 46 is disposed between the pressure receiving plate 42 and the pressure plate 45 and held in engagement with the driven friction plates 44.

The clutch outer 41 integrally has a cylindrical portion 41 a, an end wall portion 41 b and a connecting cylindrical portion 41 c. The end wall portion 41 b is connected to an end portion of the cylindrical portion 41 a on the side nearest the primary driven gear 37. The connecting cylindrical portion 41 c, which is coaxial with the cylindrical portion 41 a, is connected to a central portion of the end wall portion 41 b and extends in a liquid-tight manner through the crankcase 18. The connecting cylindrical portion 41 c is spline-coupled to the transmission member 38 with the splines extending in the axial direction of the main shaft 20. Outer circumferential portions of the driving friction plates 43 are engaged with the cylindrical portion 41 a in such a manner as to allow axial movement thereof but prevent relative rotational movement.

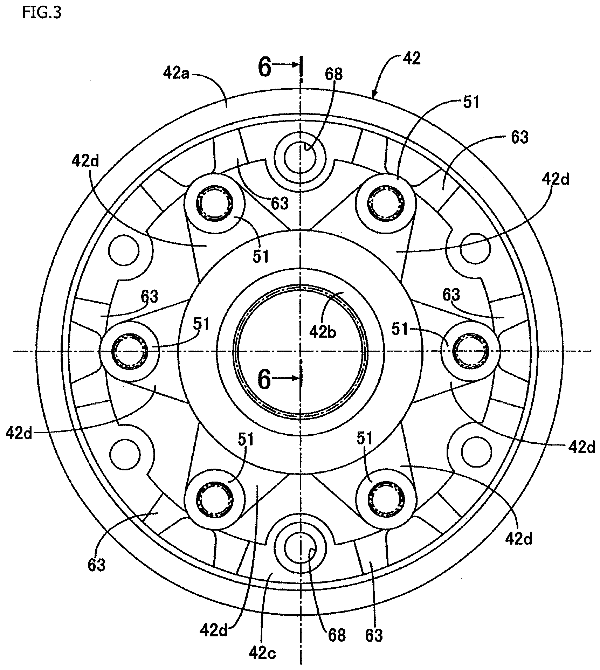

Referring also to FIG. 3, the pressure receiving plate 42 integrally has a pressure receiving plate portion 42a in the form of a ring plate, a cylindrical boss portion 42b, an annular flange portion 42c and a plurality of (six in the present embodiment) spoke portions 42d. The pressure receiving plate portion 42a faces the driving friction plates 43 disposed at one end of the interleaved driving friction plates 43 and driven friction plates 44, which overlap with each other, from the end wall portion 41 b side of the clutch outer 41. The boss portion 42b is spline-coupled to the main shaft 20. The annular flange portion 42c protrudes radially inwardly from an inner periphery of the pressure receiving plate portion 42a. The spoke portions 42d radially connect the annular flange portion 42c and the boss portion 42b to each other.

An annular stepped portion 20a is formed on the main shaft 20 such that an inner ring 47a provided on a ball bearing 47 interposed between the main shaft 20 and the crankcase 18 abuts at one end thereof with the annular stepped portion 20a. The boss portion 42b abuts at one end thereof with a first thrust washer 48, which cooperates with the other end of the inner ring 47a to sandwich the sleeve 39 therebetween. A nut 50 meshes with the main shaft 20 such that it cooperates with the other end of the boss portion 42b to sandwich a second thrust washer 49 therebetween. The nut 50 is tightened to fix the boss portion 42b, and thus the pressure receiving plate 42, to the main shaft 20.

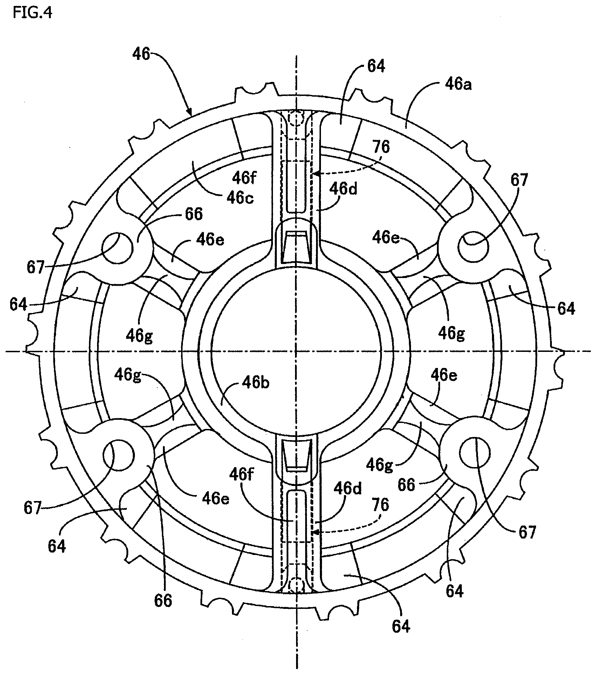

Referring also to FIG. 4, the clutch hub 46 is formed such that it integrally has an outer side cylindrical portion 46a, an inner side cylindrical portion 46b, an annular flange portion 46c, a pair of spoke portions 46d, four further spoke portions 46e, ribs 46f, and ribs 46g. The outer side cylindrical portion 46a is engaged at an outer periphery thereof with the driven friction plates 44. The inner side cylindrical portion 46b is disposed in and coaxially with the outer side cylindrical portion 46a and coaxially surrounds the main shaft 20. The annular flange portion 46c protrudes radially inwardly from an inner periphery of the outer side cylindrical portion 46a. The spoke portions 46d are disposed on one diametrical line of the outer side cylindrical portion 46a and the inner side cylindrical portion 46b, so as to extend radially and connect the outer side cylindrical portion 46a and the inner side cylindrical portion 46b with each other. The ribs 46f are provided continuously on an inner periphery of the outer side cylindrical portion 46a so as to project from a side face of the spoke portions 46d on the opposite side to the pressure receiving plate 42. The ribs 46g are provided continuously on an inner periphery of the outer side cylindrical portion 46a in such a manner as to project from a side face of the spoke portions 46e on the opposite side to the pressure receiving plate 42. The spoke portions 46d and 46e are arranged so as to be circumferentially equispaced.

Referring back to FIG. 2, the pressure plate 45 is disposed so as to cooperate with the pressure receiving plate 42 to sandwich therebetween the interleaved driving friction plates 43 and driven friction plates 44, and with the clutch hub 46, in an axial direction of the main shaft 20. A boss 51 is provided integrally in a projecting manner on the pressure plate 45 at each of the six circumferentially equispaced locations of the spoke portions 42d of the pressure receiving plate 42 and extends through the clutch hub 46 in the axial direction. Spring holding tubes 45a are provided integrally on the pressure plate 45 and coaxially surround the bosses 51, and a spring seat 52 is formed at an end portion of each spring holding tube 45a at the side of the spring holding tube 45a nearest the clutch hub 46. Meanwhile, supporting tubes 53 abut at one end thereof with an end portion of the bosses 51, and spring seats 54 abut with the other end of the supporting tubes 53 and cooperate with the bosses 51 to sandwich the supporting tubes 53 therebetween. Further, bolts 55 extend through the spring seats 54 and the supporting tubes 53 and are screwed in the bosses 51. Coiled main coil springs 56 are provided in a compressed state between the spring seats 54 and the spring seats 52 and surround part of the bosses 51 and the supporting tubes 53.

The main coil springs 56 exert spring force, for biasing the pressure plate 45 in a direction toward the pressure receiving plate 42. The pressure plate 45 cooperates with the pressure receiving plate portion 42a of the pressure receiving plate 42 under the spring force of the main coil springs 56 to sandwich the driving friction plates 43 and the driven friction plates 44 therebetween, to place the internal combustion engine E and the main shaft 20 into a coupled state.

A release plunger 58 is connected coaxially to a central portion of the pressure plate 45, and part of the release plunger 58 is fitted for sliding movement in a shaft hole 59 provided coaxially in the main shaft 20. Further, a release rod 60 is fitted for axial movement in the shaft hole 59 and is provided continuously to the release plunger 58 through a thrust bearing 61. Accordingly, the release plunger 58 is pressed by means of the release rod 60 to retract the pressure plate 45, so that the pressure plate 45 is spaced away from the pressure receiving plate 42 (against the spring force of the main coil springs 56) so that power transmission between the internal combustion engine E and the main shaft 20 can be cut off.

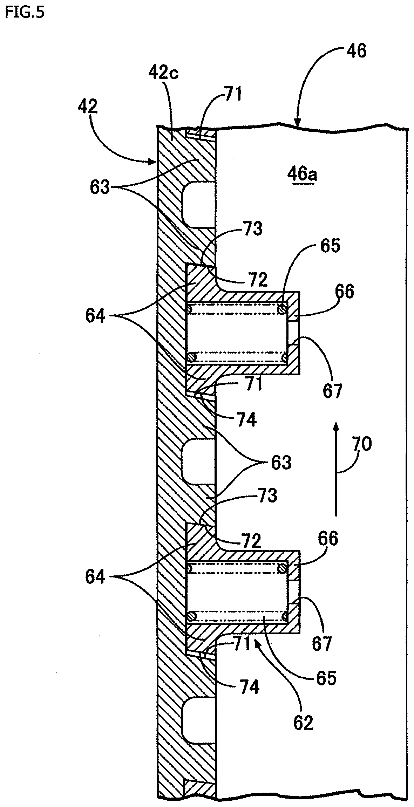

Referring also to FIG. 5, the clutch apparatus 35 includes a counter torque reduction mechanism 62. The counter torque reduction mechanism 62 is configured such that, in response to an input of counter torque from the main shaft 20 to the pressure receiving plate 42 when the clutch apparatus 35 is in a connected state, the pressure plate 45 is pressed by the clutch hub 46 in a direction so as to move the pressure plate 45 away from the pressure receiving plate 42. The counter torque reduction mechanism 62 thereby decreases the counter torque transmitted to the internal combustion engine E.

The counter torque reduction mechanism 62 is configured from pressure receiving plate side cams 63, clutch hub side cams 64, and a plurality of auxiliary coil springs 65. The pressure receiving plate side cams 63 are formed integrally on the annular flange portion 42c of the pressure receiving plate 42 at locations of the pressure receiving plate 42 corresponding to the spoke portions 42d. The clutch hub side cams 64 are formed integrally on the annular flange portion 46c at locations of the clutch hub 46 corresponding to the spoke portions 46d and 46e. The auxiliary coil springs 65 are provided in a compressed state between the pressure receiving plate 42 and the clutch hub 46, and have a spring load lower than that of the main coil springs 56.

A spring accommodating tubular portion 66 of a bottomed cylindrical shape, which opens to the pressure receiving plate 42 side, is provided integrally at each continuous portion between the four spoke portions 46e and the annular flange portion 46c provided on the clutch hub 46, such that the tubular portion 66 projects to the opposite side to the pressure receiving plate 42 from the corresponding continuing portion described hereinabove. The auxiliary coil spring 65 is accommodated in the spring accommodating tubular portion 66, and is provided in a compressed state between the pressure receiving plate 42 and the clutch hub 46. A through-hole 67 is provided in a closed end wall of the spring accommodating tubular portion 66 at the opposite side to the pressure receiving plate 42.

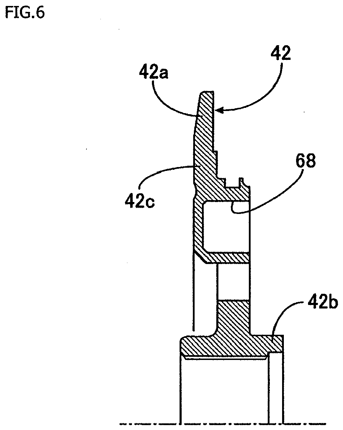

Referring particularly to FIGS. 2 and 6, spring accommodating tubular portions 66 are not provided at continuous portions between the two spoke portions 46d and annular flange portion 46c provided on the clutch hub 46; instead, spring accommodating recessed portions 68 are provided on the pressure receiving plate 42 at locations corresponding to the spoke portions 46d. Further, the auxiliary coil springs 65 accommodated in the spring accommodating recessed portions 68 are provided in a compressed form between the pressure receiving plate 42 and the clutch hub 46.

The pressure receiving plate side cams 63 are formed integrally on the annular flange portion 42c of the pressure receiving plate 42 at locations corresponding to the six spoke portions 42d provided on the pressure receiving plate 42. The pressure receiving plate side cams 63 project from the annular flange portion 42c in such a manner as to project in the same direction as the projecting direction of the bosses 51. A pressure receiving plate side first cam face 71 is formed on a front face of each of the pressure receiving plate side cams 63 which extends along a rotational direction 70 in FIG. 5, where rotational direction 70 indicates the direction of rotation of the clutch hub 46 while power is being transmitted from the primary driven gear 37 to the main shaft 20. The pressure receiving plate side first cam face 71 is inclined such that it is positioned rearwardly along the rotational direction 70 toward the tip end side. A pressure receiving plate side second cam face 72 is formed on a rear face of each of the pressure receiving plate side cams 63 which extends along the rotational direction 70 such that it is inclined such that it is positioned forwardly along the rotational direction 70 toward the tip end side.

The clutch hub side cams 64 are formed integrally on the annular tubular portion 46c of the clutch hub 46 in such a manner as to project toward the pressure receiving plate 42 side while they extend to the opposite sides in a circumferential direction from the continuing portions of the spoke portions 46d and 46e of the clutch hub 46. A clutch hub side first cam face 73 is formed on a front face of each of the clutch hub side cams 64 which extends along the rotational direction 70 and is inclined in such a manner as to be positioned rearwardly along the rotational direction 70 toward the tip end side. A clutch hub side second cam face 74 is formed on a rear face of each of the clutch hub side cams 64 which extends along the rotational direction 70 and is inclined such that it is positioned forwardly along the rotational direction 70 toward the tip end side.

If a torque variation resulting from acceleration arises in a torque transmission state between the primary driven gear 37 and the main shaft 20, then the clutch hub side first cam faces 73 are brought into abutment with the pressure receiving plate side second cam faces 72 to generate a relative angular displacement between the clutch hub 46 and the pressure receiving plate 42, such that the clutch hub side second cam faces 74 of the clutch hub side cams 64 are spaced away from the pressure receiving plate side second cam faces 72. Thereupon, the clutch hub 46 moves so as to compress the auxiliary coil spring 65, to reduce the reverse biasing force by which the biasing force of the main coil springs 56 has been lowered, and thereby allow the biasing forces of the main coil springs 56 to be exhibited fully to raise the biasing force.

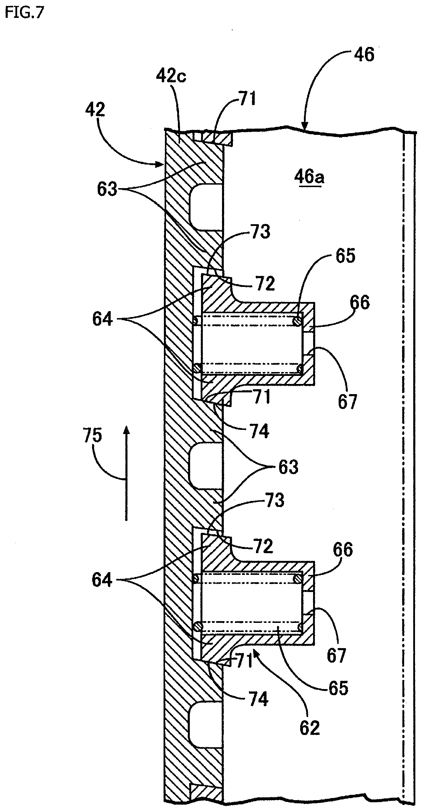

If a torque variation resulting from deceleration arises in a torque transmission state between the primary driven gear 37 and the main shaft 20, then counter torque indicated by arrow 75 (in the reverse direction to the rotational direction 70) acts upon the pressure receiving plate 42 as depicted in FIG. 7. Consequently, the pressure receiving plate side first cam faces 71 are brought into abutment with the clutch hub side second cam faces 74 to generate a relative angular displacement between the pressure receiving plate 42 and the clutch hub 46, such that the clutch hub side first cam face 73 is spaced away from the pressure receiving plate side second cam face 72. Thereupon, the clutch hub 46 is pushed to move in a direction such that the pressing force between the driving friction plates 43 and the driven friction plates 44 decreases, so that the clutch hub 46 is moved away from the pressure receiving plate 42 from the position indicated by a chain line to another position indicated by a solid line in FIG. 7.

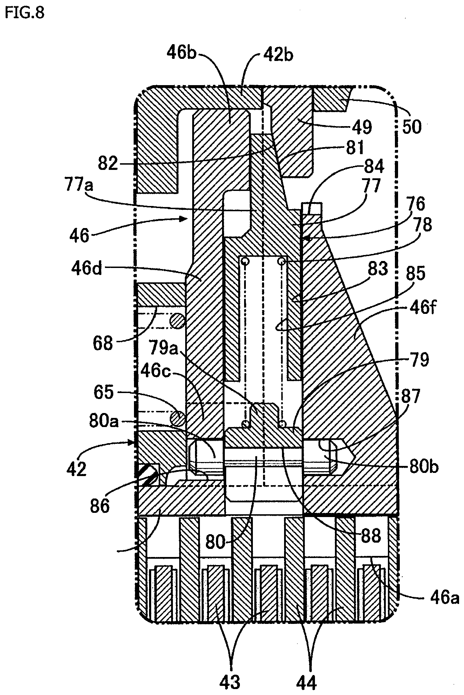

Referring also to FIG. 8, the clutch apparatus 35 includes a cancel mechanism 76 which prevents the functioning of the counter torque reduction mechanism 62 in a state in which the rotational speed of the clutch hub 46 is equal to or lower than a predetermined rotational speed. The cancel mechanism 76 includes a weight member 77, a coil spring 78 and a locking portion 82. The weight member 77 is fitted for sliding movement in the clutch hub 46 in such a manner as to be capable of sliding in a radial direction relative to the main shaft 20 and has an engaging portion 81 at a radially inner end portion. The coil spring 78 is an elastic member for biasing the weight member 77 radially inwardly. The locking portion 82 is formed on the main shaft 20 or on a locking member fixed to the main shaft 20 such that the engaging portion 81 can engage with the locking portion 82 from the side opposite to the pressure plate 45. In the present embodiment, the locking member includes the pressure receiving plate 42 which is mounted on the main shaft 20 so that it cannot rotate relative thereto and in a fixed axial position, and the second thrust washer 49 which is sandwiched between the pressure receiving plate 42 and the nut 50 screwed on the main shaft 20. The weight members 77 are fitted for sliding movement in the pair of spoke portions 46d provided on the clutch hub 46 which are disposed on one diametrical line of the main shaft 20.

Each weight member 77 integrally has a protrusion 77a having a tip end portion facing an outer periphery of a side face of the second thrust washer 49 at the side opposite to the nut 50. The engaging portion 81 which faces in the direction toward the pressure plate 45 is formed at a tip end portion of the protrusion 77a. The engaging portion 81 is formed as an inclined face, inclined such that the radially outer side extends further toward the pressure plate 45. Further, the locking portion 82 is formed as a tapering face on an outer circumferential portion of the second thrust washer 49 which faces in the direction away from the pressure plate 45.

A sliding hole 83 is provided in the clutch hub 46 so as to extend in a radial direction relative to the main shaft 20, and the weight member 77 is fitted for sliding movement in the sliding hole 83. The coil spring 78 is provided in a compressed state between the weight member 77 and a spring receiving member 79. The spring receiving member 79 is formed as a separate member from the weight member 77 such that it is accommodated in the sliding hole 83 radially outwardly of the weight member 77, and is positioned at a fixed position in the sliding hole 83.

A recessed portion 85 is formed on the weight member 77 and is open toward the spring receiving member 79. One end of the coil spring 78 is accommodated in the recessed portion 85 and abuts with the weight member 77. Meanwhile, the spring receiving member 79 on which the other end portion of the coil spring 78 abuts has a projecting guide shaft portion 79a. The guide shaft portion 79a is inserted in an end portion of the coil spring 78 at the spring receiving member 79 side.

The weight member 77 is fitted so that it can slide on the face of the spoke portion 46d on the side opposite to the pressure receiving plate 42. The sliding hole 83 is formed so as to extend in a radial direction of the clutch hub 46 while spanning the spoke portion 46d and the rib 46f in an axial direction of the clutch hub 46. The sliding hole 83 is open at a radially outer end thereof to the outer side of the outer side cylindrical portion 46a of the clutch hub 46. Meanwhile, a cutout portion 84 is provided at a radially inner end portion of the spoke portion 46d and the rib 46f and allows an inner end portion of the sliding hole 83 to be exposed therethrough. The protrusion 77a of the weight member 77 fitted for sliding movement in the sliding hole 83 projects from the cutout portion 84 toward the second thrust washer 49.

The spring receiving member 79 is engaged with a pin 80 which is attached to the clutch hub 46 across the sliding hole 83, at the side of the spring receiving member 79 opposite to the coil spring 78. In particular, the pin 80 is formed such that it has increased diameter portions 80a and 80b at its ends. In the annular flange portion 46c, a fitting hole 86 and an insertion hole 87 are provided coaxially across the sliding hole 83. The fitting hole 86 is open to a side face of the annular flange portion 46c at the side facing the pressure receiving plate 42, such that the increased diameter portion 80a may be inserted in the fitting hole 86. The insertion hole 87 is formed with a diameter equal to that of the fitting hole 86 such that the increased diameter portion 80b may be inserted in the insertion hole 87. In a state in which the increased diameter portion 80a is inserted in the fitting hole 86 and the increased diameter portion 80b is inserted in the insertion hole 87, the pin 80 is engaged with a locking recessed portion 88 provided on the spring receiving member 79 on the side opposite to the coil spring 78. Further, the pin 80 is prevented from leaving the clutch hub 46 by the pressure receiving plate 42.

Now, action of the present embodiment will be described. Functioning of the counter torque reduction mechanism 62, which, in response to an input of rotating power from the main shaft 20 to the pressure receiving plate 42, moves, by means of the clutch hub 46, the pressure plate 45 in a direction such that the pressure plate 45 is spaced away from the pressure receiving plate 42, is prevented by the cancel mechanism 76 in a state where the rotational speed of the clutch hub 46 is equal to or lower than a predetermined rotational speed. The cancel mechanism 76 includes the weight member 77, coil spring 78 and locking portion 82. The weight member 77 is fitted for sliding movement in the clutch hub 46 such that it can slidably move in the radial direction of the main shaft 20. The weight member 77 has the engaging portion 81 at a radially inner end portion thereof. The coil spring 78 biases the weight member 77 radially inwardly. The locking portion 82 is formed on the second thrust washer 49, which is a locking member fixed to the main shaft 20, such that it allows the engaging portion 81 to engage from the side opposite to the pressure plate 45. The engaging portion 81 at the radially inner end portion of the weight member 77 is engaged with the locking portion 82 of the second thrust washer 49 in a state in which the centrifugal force acting on the weight member 77 is low, that is, in a state in which the rotational speed of the clutch hub 46 is low, to restrict movement of the clutch hub 46 in a direction in which the pressure plate 45 is pressed. Therefore, the cancel mechanism 76 is configured to be compact, and it is possible to avoid an increase in the size of the clutch apparatus 35 in the axial direction, and to provide counter torque to the main shaft 20, when the vehicle is pushed to move it or in a similar situation, to start up the internal combustion engine E.

The engaging portion 81 is formed as an inclined face inclined such that the radially outer part projects further toward the pressure plate 45, and the locking portion 82 is formed as a tapering face as described hereinabove. Therefore, even if the engaging portion 81 and the locking portion 82 become worn through friction, the wedge-shaped weight member 77 moves. Consequently, the engagement of the engaging portion 81 with the locking portion 82 can be achieved for a long period of time, and the durability of the cancel mechanism 76 can be enhanced.

Further, the locking portion 82 is formed on the second thrust washer 49 sandwiched between the pressure receiving plate 42 which is mounted on the main shaft 20 on a fixed axial position so that it cannot rotate relative thereto and the nut 50 screwed on the main shaft 20. Therefore, there is no need to provide a locking member for exclusive use with the cancel mechanism 76, and the number of parts can be reduced. Further, when the locking portion 82 is abraded, it is only necessary to exchange the second thrust washer 49, and consequently, superior maintainability can be achieved.

Further, the sliding hole 83 in which the weight member 77 is fitted for sliding movement is provided on the clutch hub 46 and extends in a radial direction of the main shaft 20. Further, the coil spring 78 is sandwiched in a compressed state between the weight member 77 and the spring receiving member 79, which is formed as a separate member from the weight member 77 and is accommodated in the sliding hole 83 radially outwardly of the weight member 77 and positioned at a fixed position in the sliding hole 83. Furthermore, the projecting guide shaft portion 79a which is inserted into an end portion of the coil spring 78 is provided on the spring receiving member 79. Therefore, the weight member 77, coil spring 78 and spring receiving member 79 are attached in a radially juxtaposed relationship with each other in the clutch hub 46, and consequently, a more compact configuration of the cancel mechanism 76 can be achieved.

Further, the spring receiving member 79 is engaged with the pin 80 attached to the clutch hub 46 across the sliding hole 83 at the side of the spring receiving member 79 opposite the coil spring 78. Therefore, upon assembly, the weight member 77, coil spring 78, spring receiving member 79 and pin 80 may be assembled in this order to the clutch hub 46, and the ease of assembly can be enhanced.

Further, the clutch hub 46 integrally has the plurality of spoke portions 46d and 46e extending radially in an opposing relationship to the pressure receiving plate 42, and the weight member 77 is fitted for sliding movement at a side face side of each of the spoke portions 46d. Therefore, a dead space formed between the pressure plate 45 and the clutch hub 46 can be utilized effectively, to house the cancel mechanism 76.

While a preferred embodiment of the present invention has been described, the present invention is not limited to the embodiment described above; various design changes may be made without departing from the scope of the present invention as defined in the claims.

## Claims

1. A clutch apparatus for a vehicle, comprising:
a clutch outer (41) to which power from an internal combustion engine (E) may be inputted;
a pressure receiving plate (42) fixed to an output power shaft (20);
a driving friction plate (43) which is engaged by the clutch outer (41);
a driven friction plate (44) disposed in an opposing relationship to the driving friction plate (43);
a pressure plate (45) disposed so as to cooperate with the pressure receiving plate (42) to sandwich the driving friction plate (43) and the driven friction plate (44) therebetween, and which is movable in an axial direction of the output power shaft (20);
a clutch hub (46) disposed between the pressure receiving plate (42) and the pressure plate (45) in an axial direction of the output power shaft (20), for being engaged by the driven friction plate (44);
a counter torque reduction mechanism (62) which causes the clutch hub (46) to press the pressure plate (45) in a direction so that the pressure plate (45) is spaced away from the pressure receiving plate (42) in response to an input of rotational power from the output power shaft (20) to the pressure receiving plate (42); and
a cancel mechanism (76) which prevents the counter torque reduction mechanism (62) from functioning in a state in which a rotational speed of the clutch hub (46) is equal to or lower than a predetermined rotational speed;
the cancel mechanism (76) including
a weight member (77) fitted for sliding movement in the clutch hub (46) in such a manner as to be capable of slidably moving in a radial direction of the output power shaft (20) and having an engaging portion (81) at a radially inner end portion,
an elastic member (78) which biases the weight member (77) radially inwardly, the clutch apparatus being **characterised in that** the cancel mechanism (76) further includes
a locking element (82) formed on the output power shaft (20) or on a locking member (49) fixed to the output power shaft (20), so as to be capable of being engaged with the engaging portion (81) from the side opposite to the pressure plate (45).

2. The clutch apparatus for a vehicle according to claim 1, wherein the engaging portion (81) is formed as an inclined face inclined such that the radially outer part projects further toward the pressure plate (45) side, and the locking element (82) is formed as a tapering face.

3. The clutch apparatus for a vehicle according to claim 1 or 2, wherein the locking member (49) on which the locking element (82) is formed is a thrust washer, sandwiched between the pressure receiving plate (42) mounted in a fixed axial position on the output power shaft (20) so that it cannot rotate relative thereto and a nut (50) screwed onto the output power shaft (20).

4. The clutch apparatus for a vehicle according to any one of claims 1 to 3, wherein the clutch hub (46) has a radially extending sliding hole (83) provided therein in which the weight member (77) is fitted for sliding movement, and the elastic member is a coil spring (78) disposed in a compressed state between the weight member (77) and a spring receiving member (79) formed as a separate member from the weight member (77) and accommodated at a fixed position in the sliding hole (83) radially outwardly of the weight member (77), the spring receiving member (79) having a projecting guide shaft portion (79a) so as to be inserted into an end portion of the coil spring (78) at the spring receiving member (79) side.

5. The clutch apparatus for a vehicle according to claim 4, wherein the spring receiving member (79) is engaged with a pin (80) mounted on the clutch hub (46) across the sliding hole (83) at the side of the spring receiving member (79) opposite to the coil spring (78).

6. The clutch apparatus for a vehicle according to any one of claims 1 to 5, wherein the clutch hub (46) integrally has a plurality of spoke portions (46d, 46e) extending radially in an opposing relationship to the pressure receiving plate (42), and the weight member (77) is fitted for sliding movement on a side face of a selected one spoke portion (46d) of the plurality of spoke portions (46d, 46e) at the side opposite to the pressure receiving plate (42).

## Patentansprüche

1. Kupplungsvorrichtung für ein Fahrzeug umfassend:
ein Kupplungsgehäuse (41), in welches Strom von einer Verbrennungskraftmaschine (E) eingespeist werden kann;
eine Druckaufnahmeplatte (42), die an einer Abtriebswelle (20) fixiert ist;
eine antreibende Reibungsplatte (43), in welche das Kupplungsgehäuse (41) eingreift;
eine angetriebene Antriebsplatte (44), die gegenüber der antreibenden Reibungsplatte (43) angeordnet ist;
eine Druckplatte (45), die derart angeordnet ist, dass sie mit der Druckaufnahmeplatte (42) zusammenwirkt, um die antreibende Reibungsplatte (43) und die angetriebene Reibungsplatte (44) dazwischen aufzunehmen, und welche in einer Axialrichtung der Abtriebswelle (20) bewegt werden kann;
eine Kupplungsnabe (46), die zwischen der Druckaufnahmeplatte (42) und der Druckplatte (45) in einer Axialrichtung der Abtriebswelle (20) angeordnet ist, um von der angetriebenen Reibungsplatte (44) eingegriffen zu werden;
einen Gegendrehmomentverringerungsmechanismus (62), welcher die Kupplungsnabe (46) dazu bringt, die Druckplatte (45) derart in eine Richtung zu pressen, dass die Druckplatte (45) von der Druckaufnahmeplatte (42) in Reaktion auf eine Eingabe von Drehleistung von der Abtriebswelle (20) in die Druckaufnahmeplatte (42) beabstandet ist; und
einen Aufhebungsmechanismus (76), welcher verhindert, dass der Gegendrehmomentverringerungsmechanismus (62) in einem Zustand arbeitet, in welchem eine Drehgeschwindigkeit der Kupplungsnabe (46) gleich oder geringer als eine vorbestimmte Drehgeschwindigkeit ist;
wobei der Aufhebungsmechanismus (76) Folgendes aufweist:
ein Gewichtsteil (77), das für eine Verschiebungsbewegung in der Kupplungsnabe (46) derart angepasst ist, dass es in der Lage ist, sich verschiebbar in einer Radialrichtung der Abtriebswelle (20) zu bewegen und einen Eingriffsabschnitt (81) an einem radial inneren Endabschnitt aufweist,
ein elastisches Teil (78), welches das Gewichtsteil (77) radial nach innen vorspannt, wobei die Kupplungsvorrichtung **dadurch gekennzeichnet ist, dass** der Aufhebungsmechanismus (76) ferner Folgendes aufweist:
ein Sperrelement (82), das auf der Abtriebswelle (20) oder auf einem Sperrteil (49) gebildet ist, das an der Abtriebswelle (20) derart fixiert ist, dass es in der Lage ist, mit dem Eingriffsabschnitt (81) von der Seite gegenüber der Druckplatte (45) in Eingriff gebracht zu werden.

2. Kupplungsvorrichtung für ein Fahrzeug nach Anspruch 1, wobei der Eingriffsabschnitt (81) als eine geneigte Fläche gebildet ist, die derart geneigt ist, dass der radial äußere Teil weiter zu der Seite der Druckplatte (45) hin vorsteht, und das Sperrelement (82) als eine sich verjüngende Fläche gebildet ist.

3. Kupplungsvorrichtung für ein Fahrzeug nach Anspruch 1 oder 2, wobei das Sperrteil (49), auf welchem das Sperrelement (82) gebildet ist, eine Anlaufscheibe ist, die zwischen der Druckaufnahmeplatte (42), die derart in einer fixierten axialen Position auf der Abtriebswelle (20) montiert ist, dass sie sich bezüglich dieser nicht drehen kann, und einer Mutter (50), die auf die Abtriebswelle (20) aufgeschraubt ist, aufgenommen.

4. Kupplungsvorrichtung für ein Fahrzeug nach einem der Ansprüche 1 bis 3, wobei die Kupplungsnabe (46) eine sich radial erstreckende Verschiebebohrung (83) aufweist, die darin bereitgestellt ist, in welcher das Gewichtsteil (77) für eine Verschiebungsbewegung angepasst ist, und das elastische Teil eine Schraubenfeder (78) ist, die in einem zusammengedrückten Zustand zwischen dem Gewichtsteil (77) und einem Federaufnahmeteil (79), das als ein separates Teil von dem Gewichtsteil (77) gebildet ist, angeordnet ist und in einer fixierten Position in der Verschiebebohrung (83) radial auswärts des Gewichtsteils (77) aufgenommen ist, wobei das Federaufnahmeteil (79) einen vorstehenden Führungswellenabschnitt (79a) aufweist, um in einen Endabschnitt der Schraubenfeder (78) auf der Seite des Federaufnahmeteils (79) eingeführt zu werden.

5. Kupplungsvorrichtung für ein Fahrzeug nach Anspruch 4, wobei das Federaufnahmeteil (79) mit einem Stift (80) in Eingriff steht, der auf der Kupplungsnabe (46) entlang der Verschiebebohrung (83) auf der Seite des Federaufnahmeteils (79) gegenüber der Schraubenfeder (78) montiert ist.

6. Kupplungsvorrichtung für ein Fahrzeug nach einem der Ansprüche 1 bis 5, wobei die Kupplungsnabe (46) einstückig mehrere Speichenabschnitte (46d, 46e) aufweist, die sich radial gegenüber der Druckaufnahmeplatte (42) erstrecken, und das Gewichtsteil (77) zur Verschiebungsbewegung auf einer Seitenfläche eines ausgewählten Speichenabschnitts (46d) der mehreren Speichenabschnitte (46d, 46e) auf der Seite gegenüber der Druckaufnahmeplatte (42) angepasst ist.

## Revendications

1. Dispositif d'embrayage pour un véhicule, comprenant :
un couvercle d'embrayage (41) auquel la puissance provenant d'un moteur à combustion interne (E) peut être entrée ;
une plaque de réception de pression (42) fixée à un arbre de puissance de sortie (20) ;
une plaque de friction d'entraînement (43) qui est en prise par le couvercle d'embrayage (41) ;
une plaque de friction entraînée (44) disposée dans une relation opposée à la plaque de friction d'entraînement (43) ;
une plaque de pression (45) disposée afin de coopérer avec la plaque de réception de pression (42) pour prendre en sandwich la plaque de friction d'entraînement (43) et la plaque de friction entraînée (44) entre ces dernières et qui est mobile dans une direction axiale de l'arbre de puissance de sortie (20) ;
un moyeu d'embrayage (46) disposé entre la plaque de réception de pression (42) et la plaque de pression (45) dans une direction axiale de l'arbre de puissance de sortie (20), pour être mis en prise par la plaque de friction entraînée (44) ;
un mécanisme de réduction de couple antagoniste (62) qui amène le moyeu d'embrayage (46) à presser la plaque de pression (45) dans un certain sens de sorte que la plaque de pression (45) est écartée de la plaque de réception de pression (42) en réponse à une entrée de puissance de rotation provenant de l'arbre de puissance de sortie (20) à destination de la plaque de réception de pression (42) ; et
un mécanisme d'annulation (76) qui empêche le mécanisme de réduction de couple antagoniste (62) de fonctionner dans un état dans lequel une vitesse de rotation du moyeu d'embrayage (46) est égale ou inférieure à une vitesse de rotation prédéterminée ;
le mécanisme d'annulation (76) incluant
un élément formant contrepoids (77) ajusté pour un mouvement coulissant dans le moyeu d'embrayage (46) de façon à être capable de se déplacer de manière coulissante dans une direction radiale de l'arbre de puissance de sortie (20) et ayant une partie de mise en prise (81) au niveau d'une partie d'extrémité intérieure de façon radiale,
un élément élastique (78) qui sollicite l'élément formant contrepoids (77) de façon radiale vers l'intérieur, le dispositif d'embrayage étant **caractérisé en ce que** le mécanisme d'annulation (76) inclut en outre
une pièce de verrouillage (82) formée sur l'arbre de puissance de sortie (20) ou sur un élément de verrouillage (49) fixé à l'arbre de puissance de sortie (20), afin d'être capable d'être mise en prise par la partie de mise en prise (81) à partir du côté opposé à la plaque de pression (45).

2. Dispositif d'embrayage pour un véhicule selon la revendication 1, dans lequel la partie de mise en prise (81) est formée comme une face inclinée, inclinée de sorte que la partie extérieure de façon radiale dépasse davantage vers le côté plaque de pression (45), et la pièce de verrouillage (82) est formée comme une face allant en s'amincissant.

3. Dispositif d'embrayage pour un véhicule selon la revendication 1 ou 2, dans lequel l'élément de verrouillage (49) sur lequel la pièce de verrouillage (82) est formée est une rondelle de butée, prise en sandwich entre la plaque de réception de pression (42) montée dans une position axiale fixe sur l'arbre de puissance de sortie (20) de sorte qu'elle ne peut pas tourner à celle-ci et un écrou (50) vissé sur l'arbre de puissance de sortie (20).

4. Dispositif d'embrayage pour un véhicule selon l'une quelconque des revendications 1 à 3, dans lequel le moyeu d'embrayage (46) a un trou de coulissement s'étendant de façon radiale (83) prévu en son sein dans lequel l'élément formant contrepoids (77) est ajusté pour un mouvement coulissant, et l'élément élastique est un ressort hélicoïdal (78) disposé dans un état comprimé entre l'élément formant contrepoids (77) et un élément de réception de ressort (79) formé comme un élément distinct de l'élément formant contrepoids (77) et logé à une position fixe dans le trou de coulissement (83) de façon radiale vers l'extérieur de l'élément formant contrepoids (77), l'élément de réception de ressort (79) ayant une partie d'arbre de guidage en saillie (79a) afin d'être insérée dans une partie d'extrémité du ressort hélicoïdal (78) au niveau du côté élément de réception de ressort (79).

5. Dispositif d'embrayage pour un véhicule selon la revendication 4, dans lequel l'élément de réception de ressort (79) est en prise avec un goujon (80) monté sur le moyeu d'embrayage (46) à travers le trou de coulissement (83) au niveau du côté de l'élément de réception de ressort (79) opposé au ressort hélicoïdal (78).

6. Dispositif d'embrayage pour un véhicule selon l'une quelconque des revendications 1 à 5, dans lequel le moyeu d'embrayage (46) a d'un seul tenant une pluralité de parties formant rayons (46d, 46e) s'étendant de façon radiale dans une relation opposée à la plaque de réception de pression (42), et l'élément formant contrepoids (77) est ajusté pour un mouvement coulissant sur une face latérale d'une partie formant rayon sélectionnée (46d) de la pluralité de parties formant rayons (46d, 46e) au niveau du côté opposé à la plaque de réception de pression (42).
